# FASCICULE DE BREVET EUROPEEN

(11) **EP 2 819 834 B1**
(45) Date de publication et mention de la délivrance du brevet: **30.10.2019**
(21) Numéro de dépôt: 13712306.3
(22) Date de dépôt: 28.02.2013
(51) Int. Cl.: B29C 70/22, B29C 70/34, B29C 70/38, B29C 51/00, B64C 1/06, B29L 12/00, B29K 71/00, B64C 1/00, B29L 31/30

(54) **PROCÉDÉ DE FORMAGE PAR ESTAMPAGE D'UN MATÉRIAU COMPOSITE THERMOPLASTIQUE A RENFORT FIBREUX CONTINU**
VERFAHREN ZUR HERSTELLUNG EINES THERMOPLASTISCHEN VERBUNDWERKSTOFFS MIT DURCHGEHENDER FASERVERSTÄRKUNG DURCH PRESSEN
METHOD OF FORMING A THERMOPLASTIC COMPOSITE MATERIAL WITH CONTINUOUS-FIBRE REINFORCEMENT BY STAMPING

(30) Priorité: 29.02.2012 FR 1251877
(43) Date de publication de la demande: 07.01.2015
(73) Titulaire: Daher Aerospace, 41400 Saint Julien De Chedon (FR)
(72) Inventeur: KURTZ, Didier, F-44210 Pornic (FR); VAUDOUR, Julie, F-44118 La Chevroliere (FR)
(74) Mandataire: Ipside
(86) Numéro de dépôt international: PCT/FR2013/050431
(87) Numéro de publication internationale: WO 2013/128138

(56) Documents cités:
- WO-A1-02/09935
- WO-A1-2012/045969
- FR-A1- 2 766 407
- CAMPBELL F C ED - CAMPBELL FLAKE C: "Manufacturing processes for advanced composites, Chapter 10 (Thermoplastic Composites: An Unfulfilled Promise)", 1 janvier 2004 (2004-01-01), MANUFACTURING PROCESSES FOR ADVANCED COMPOSITES, ELSEVIER ADVANCED TECHNOLOGY, OXFORD, GB, PAGE(S) 1 - 41, XP002615944, ISBN: 978-1-85617-415-2 page 360 page 376 - page 378; figure 16 page 379 - page 387

## Description

L'invention concerne un procédé de formage par estampage d'un matériau composite thermoplastique à renfort fibreux continu. L'invention est notamment adaptée à la réalisation d'une pièce composite de structure comprenant au moins deux faces s'étendant dans des plans sécants, et plus particulièrement à la réalisation d'une pièce en forme d'extrusion comprenant au moins deux ailes et dont les centres des sections successives suivent une courbe.

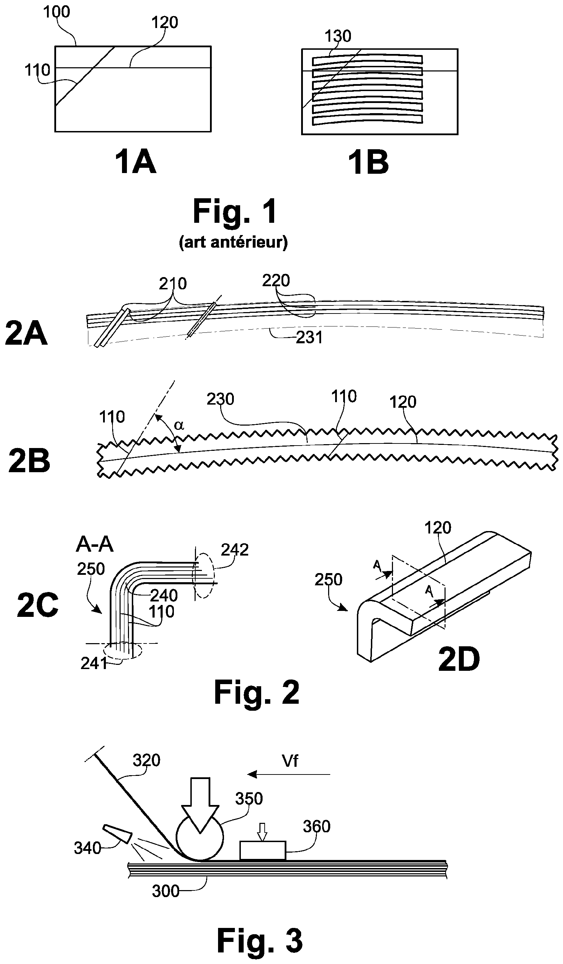

Selon l'art antérieur, une pièce de cette forme, constituée d'un matériau composite comprenant un renfort fibreux continu dans une matrice thermoplastique, peut être obtenue par l'estampage d'un flan thermoplastique consolidé. Selon cet art antérieur, décrit à titre d'exemple dans le document FR-A-2 922 276, un empilement de plis pré-imprégnés est compacté et consolidé afin de constituer une plaque. Cette plaque est alors détourée en panoplie de sorte à constituer des flans, lesquels flans sont alors estampés par un dispositif poinçon-matrice à une température voisine ou supérieure à la température de fusion de la matrice. L'estampage d'un flan composite à renfort fibreux continu est réalisé sans évolution d'épaisseur du flan, dont le matériau ne peut soutenir une déformation plastique. Ainsi, au cours de l'opération d'estampage, ledit flan est déconsolidé lors du chauffage de sorte à permettre le glissement interlaminaire des plis au cours du formage, puis recompacté entre le poinçon et la matrice suite à l'estampage avant d'être reconsolidé et finalement détouré pour éliminer les bords. La figure 1, relative à l'art antérieur illustre schématiquement l'orientation des fibres lors de quelques étapes de ce procédé. Ainsi, figure 1A, à l'issue de la consolidation de la plaque composite (100), celle-ci comprend, selon cet exemple de réalisation, des fibres continues (110, 120), c'est-à-dire s'étendant entre deux bords de ladite plaque, orientées selon des angles dit à 0° (120) et à 45° (110). Avant l'estampage, figure 1B, une pluralité de flans (130) est détourée dans cette plaque (100) par exemple, par un jet d'eau abrasif. La nécessité de respecter l'orientation des fibres impose l'orientation des flans dans la plaque (100) ce qui limite les possibilités d'imbrication des panoplies et conduit à un taux de chute important. Par ailleurs, lors de cette étape de détourage, en particulier lorsque le flan (130) est courbe, il n'est pas possible de respecter l'orientation nominale des fibres en tout point du flan. Ainsi, l'opération d'estampage ultérieure génère des tensions dans les fibres, fonction de leur orientation par rapport à la direction de formage. Selon l'art antérieur, l'utilisation d'un flan tiré d'une plaque compactée - consolidée est indispensable pour la mise en œuvre du procédé d'estampage à chaud. En effet, pour obtenir un glissement interlaminaire des plis lors du formage, il est nécessaire que la température de chauffage du flan soit uniforme tant en surface qu'en épaisseur. La présence d'une lame d'air dans la stratification, même sur une courte distance, crée un défaut de chauffage qui se traduit par un point de fixation entre les plis concernés, s'opposant localement au glissement interlaminaire et générant des contraintes dans les fibres. De plus, cette lame d'air récolte les produits de dégazage lors de la chauffe du flan, créant ainsi une porosité. Pour éviter ces défauts, les plaques consolidées (100) font l'objet, selon l'art antérieur, d'un contrôle systématique par ultrasons de leur santé matière avant le détourage des flans destinés à l'estampage. Le document « Manufacturing processes for advanced composites », Chapitre 10 : pages 379 à 387, CAMPBELL F. C. ED., ELSEVIER ADVANCED TECHNOLOGY, 01.01.2004 décrit les techniques d'estampage des matériaux composites thermoplastiques à fibres continues. Ces opérations de consolidation-reconsolidation et de contrôle systématique influencent défavorablement le coût des pièces et la productivité du procédé de mise en œuvre, tandis que le défaut d'orientation des fibres dans la pièce se traduit par des abattements des propriétés mécaniques de ladite pièce et, pour des applications aéronautiques, par des surplus de masse à performance mécanique équivalente, voire, ne permet pas l'usage d'une telle pièce pour certaines applications. À titre d'exemple, les cadres de fuselage d'un aéronef, consistent en des profilés en forme de L ou d'U cintrés selon un rayon de courbure supérieur à 2 mètres pour un avion moyen porteur. Ces cadres sont avantageusement constitués d'un matériau composite à renfort fibreux plus léger à résistance mécanique équivalente en comparaison des matériaux métalliques. Néanmoins, pour que ces pièces de structure soient aptes à résister aux diverses sollicitations mécaniques auxquelles elles peuvent être soumises en service normal et en conditions exceptionnelles, notamment en résistance au flambage, ces pièces doivent être réalisées avec une tolérance serrée d'orientation des fibres de renfort en regard de l'axe neutre de la pièce, tolérance d'orientation généralement inférieure à 1°. Ainsi, le procédé de l'art antérieur ne permet pas de réaliser une pièce composite à renfort continu et matrice thermoplastique répondant à ces tolérances.

Le document WO 02/09935 décrit un procédé mettant en oeuvre l'estampage d'un flan composite à matrice thermoplastique préconsolidé. Le procédé d'estampage considéré dans ce document est réalisé en pinçant les bords du flan lors de l'estampage de sorte que ce procédé n'est adaptable qu'à des flans renforcés par des fibres discontinues, sans contrôle du glissement interlaminaire au cours de l'opération d'estampage et avec une variation de l'épaisseur dudit flan.

Le document FR2766407 décrit un procédé pour la réalisation d'une pièce composite à renfort fibreux continu, dans une matrice thermoplastique comprenant au moins deux faces s'étendant dans des plans sécants, comprenant les étapes consistant à : a. obtenir un flan plan, comportant un empilement préconsolidé de plis, réalisé par placement automatique de fibres dites pré-imprégnées d'un polymère thermoplastique, comportant une opération consistant à :d. déposer par placement automatique de fibres, des fibres en appliquant lesdites fibres avec une pression et une température à l'interface entre lesdites fibres et une préforme constituée d'un empilement de plis fibreux également pré-imprégnés, supérieure à la température de fusion du polymère, suivi d'un refroidissement des fibres déposées par des moyens de refroidissement, lesdites fibres faisant alors partie de la préforme, avec une vitesse de dépose sélectionnée afin d'obtenir une préconsolidation, c'est à dire un empilement de plis présentant un taux de porosité inférieur à 1 % mais sans créer un réseau continu de chaîne moléculaires dans l'épaisseur de la matrice; b. réchauffer ledit flan à une température supérieure ou égale à la température de fusion du polymère constituant la matrice; c. estamper à chaud le flan ainsi réchauffé et consolider la pièce ainsi formée entre le poinçon et la matrice d'estampage.

L'invention vise à résoudre les inconvénients de l'art antérieur et concerne à cette fin un procédé de formage par estampage d'un matériau composite thermoplastique à renfort fibreux continu comprenant les étapes telles que définies dans la revendication 1.

Le terme « préconsolidé » est ici pris dans le sens d'un empilement de plis assemblés avec un taux de porosité inférieur à 1 % mais sans qu'il ne soit créé un réseau continu de chaînes moléculaires dans l'épaisseur de la matrice. Un tel flan est suffisamment rigide pour être manipulé sans difficulté et sans aucun risque de désorientation des plis, mais n'est pas pleinement consolidé et n'est pas apte à une utilisation structurale même peu exigeante. Ainsi, le flan est drapé très rapidement de manière automatique, et l'absence de vide dans l'empilement permet un chauffage rapide et uniforme du flan. Le fait que la consolidation du flan ne soit que partielle favorise le glissement interlaminaire même en présence de variations de viscosité dans le flan, ce qui réduit également les tensions dans les fibres lors de l'estampage. Ainsi, le procédé objet de l'invention permet de supprimer plusieurs opérations en comparaison de l'art antérieur, pour arriver à un résultat équivalent et même amélioré en terme de qualité.

Le terme « pré-imprégné » s'agissant de fibres thermoplastiques, est ici utilisé dans le sens de mèches thermoplastiques calandrées avec un film de polymère, poudrées d'un polymère thermoplastique ou comprenant des fibres thermoplastiques co-mêlées avec les fibres de renfort. Dans tous les cas, les fibres de renfort elles-mêmes ne sont pas imprégnées ou ne sont que partiellement imprégnées de ce polymère. Ce type de produit correspond au produit effectivement disponible commercialement sous la dénomination impropre de pré-imprégné.

L'invention est avantageusement mise en œuvre selon les modes de réalisation exposés ci-après, lesquels sont à considérer individuellement ou selon toute combinaison techniquement opérante.

Avantageusement, le procédé objet de l'invention comprend avant l'étape a) une étape consistant à :
d. déposer les fibres orientées localement suivant la courbure du flan sur toute la longueur du flan.

Ainsi, l'orientation des renforts correspond sensiblement à l'orientation nominale en tout point de la pièce finie, améliorant ainsi la tenue de ladite pièce en regard des sollicitations mécaniques.

Avantageusement, l'étape d) est réalisée en appliquant les fibres avec une pression et une température suffisantes pour obtenir une préconsolidation de l'empilement, mais une vitesse de dépose suffisamment élevé pour ne pas obtenir la consolidation totale de l'empilement. Ainsi, le procédé objet de l'invention permet d'atteindre des vitesses de dépose, donc une productivité, élevées. De plus, l'utilisation d'une vitesse de dépose élevée limite le temps d'exposition à l'air et à haute température des interfaces des plis déposés, améliorant ainsi les caractéristiques, notamment de cristallinité de la matrice dans la pièce finale.

Le procédé objet de l'invention est plus particulièrement adapté au cas où le polymère thermoplastique est un polyétheréthercétone. En effet, la température de fusion élevée de ce matériau et sa tendance à la réticulation à température élevée en présence d'une atmosphère oxydante, rendent complexes l'obtention de pièces visées par l'invention par les techniques de l'art antérieur de drapage et consolidation *in situ* ou d'estampage, prises individuellement.

Avantageusement, l'étape d) du procédé objet de l'invention comprend la dépose de fibres orientées à 0° par rapport à la courbure du flan. Cette orientation de fibre permet d'assurer la rigidité des pièces courbes vis-à-vis des sollicitations radiales.

Avantageusement l'étape d) comprend la dépose de fibres orientées selon un angle α par rapport à la courbure du flan. Après estampage ces fibres s'étendent d'un bord à l'autre de la pièce en suivant les ailes dans leurs plans respectifs participant ainsi à la résistance au flambage de la pièce composite obtenue.

L'invention concerne également un aéronef comportant un fuselage comprenant des cadres constitués d'un matériau composite à renfort fibreux et d'une matrice en PEEK obtenu par le procédé objet de l'invention. Un tel cadre est soumis à des spécifications strictes en matière d'orientation des fibres et en terme de tenue aux impacts et au feu. De plus il doit pouvoir être fabriqué en série de manière reproductible. Le procédé objet de l'invention permet de répondre à ces exigences en utilisant un composite thermoplastique avec une matrice à haute performance et de bénéficier des performances de tenue au feu et aux impacts de ce matériau, et ainsi de réduire la masse des pièces visées en regard des solutions de l'art antérieur.

L'invention est exposée ci-après selon ses modes de réalisation préférés, nullement limitatifs, et en référence aux figures 1 à 3, dans lesquelles :
- la figure 1, relative à l'art antérieur illustre en vue de dessus l'orientation des fibres dans des flans composites à matrice thermoplastique destinés à l'estampage, figure 1A, lors de la consolidation de la plaque dans laquelle sont détourés les flans, figure 1B lors du détourage des panoplies ;
- la figure 2 montre schématiquement la réalisation d'une pièce composite courbe à matrice thermoplastique comprenant deux ailes s'étendant dans des plans sécants, figure 2A, en vue de dessus au cours du drapage automatisé du flan selon le procédé objet de l'invention, figure 2B le flan plan en vue de dessus, figure 2C selon une coupe A-A définie figure 2D, une section de la pièce après estampage montrant les zones faiblement compactées aux extrémités des ailes tandis que la figure 2D montre en perspective un exemple de la pièce ainsi obtenue par le procédé objet de l'invention ;
- et la figure 3, illustre schématiquement selon une vue de profil un exemple de mise en œuvre d'un procédé de placement fibres automatisé.

Figure 2A, selon un exemple de réalisation du procédé objet de l'invention, celui-ci comprend une première étape de drapage, consistant à déposer par placement de fibres, dites pré-imprégnées du polymère thermoplastique, des bandes (210, 220) orientées en regard du contour (231) réel du flan. Cette dépose est réalisée en utilisant une machine de placement de fibres automatique à commande numérique, adaptée à la dépose de fibres pré-imprégnées d'un polymère thermoplastique, notamment de polyéthertéhercétone ou PEEK. Ainsi, les bandes (220) orientée à 0° respectent localement cette orientation dans le flan. À cette fin, lesdites bandes (220) sont déposées selon des trajectoires courbes.

Figure 3, la dépose par placement de fibres automatique est connue de l'art antérieur. Une bande (320) de fibres, dites pré-imprégnées d'un polymère thermoplastique, est déposée sur une préforme (300) constituée d'un empilement de plis fibreux également pré-imprégnés. Au cours de la mise en œuvre de cette dépose dans le cadre du procédé objet de l'invention, l'interface entre la bande (320) en cours de dépose et la préforme (300) est porté à une température égale ou légèrement supérieure, 5 °C à 10 °C, à la température de fusion du polymère thermoplastique, par des moyens de chauffage (340). Ces moyens de chauffage peuvent provenir d'un faisceau laser ou du soufflage d'un gaz chaud. La bande (320) est immédiatement pressée sur la préforme, par des moyens de pressage (350), par exemple au moyen d'un rouleau presseur. Sous l'effet de cette pression et de la température, la bande (320) est soudée à la préforme (300). Le rouleau presseur (350) et les moyens de chauffage (340) se déplacent à une vitesse d'avance Vf à mesure de la dépose, alors que des moyens de tension (non représentés) assurent la tension permanente de la partie non déposée de la bande (320) fibreuse. Des moyens de refroidissement (360), se déplaçant avec le rouleau presseur, refroidissent rapidement la bande déposée qui fait alors partie de la préforme. Selon l'art antérieur, le drapage de bandes pré-imprégnées d'un polymère thermoplastiques selon un tel procédé, vise à obtenir la consolidation *in situ* de la préforme. Pour obtenir cette consolidation complète, il est nécessaire de contrôler le temps de maintien en température et de pressage de la bande (320) sur la préforme (300) et de chauffer les deux à une température suffisante, soit près de 400 °C pour du PEEK, afin que les chaînes moléculaires du polymère constituant la matrice du futur composite, s'entremêlent sur toute l'épaisseur du pli déposé avec celles de la préforme. Ce phénomène est couramment dénommé « autohésion » et correspond à la diffusion de segments de chaînes moléculaires à travers l'interface. Dans le cas du procédé de dépose objet de l'invention, une telle consolidation complète n'est pas visée et l'objectif recherché est une autohésion partielle de la bande (320) et de la préforme (300) et l'absence de vides à l'interface. À cette fin, la dépose est réalisée avec une température de chauffage juste suffisante pour obtenir la soudure à l'interface, soit environ 350 °C pour du PEEK, sans diffusion dans l'épaisseur du pli, et avec une pression suffisante pour assurer la compacité et l'adhésion. Ces conditions permettent une dépose à une vitesse Vf élevée, en assurant un taux de porosité dans la préforme inférieur à 1 %.

Le procédé de dépose par placement de fibres permet de réaliser des déposes de fibres selon des trajectoires courbes. Cette méthode de dépose est connue de l'art antérieur sous le terme anglo-saxon de « *steering* ».

En revenant à la figure 2A, les bandes (210) orientées selon d'autres orientations, par exemple à 45°, sont également déposées de sorte à vérifier localement cette orientation.

Figure 2B, dans le flan (230) obtenu par le procédé objet de l'invention, les renforts à 0° (120) suivent la courbure du flan (230) et les renforts (110) orientés selon un angle α, conservent cette orientation relative par rapport au renfort à 0° tout le long de celui-ci. Ce flan (230) est porté à une température supérieure à la température de fusion du polymère thermoplastique constituant la matrice du futur matériau composite, par exemple, avec des moyens d'un chauffage à rayonnement infrarouge. Puis, le flan est estampé entre un poinçon et une matrice selon un procédé d'estampage à chaud connu de l'art antérieur, pour obtenir la pièce (250) finie.

Figure 2C, le procédé d'estampage met en œuvre des phénomènes de glissements interlaminaires et de percolation du polymère entre les plis et se termine par une phase de compactage-consolidation de la pièce en forme, entre le poinçon et la matrice. Ainsi, à l'issue de l'opération d'estampage, la pièce brute comprend une portion (240) majoritaire entièrement compactée et consolidée, dont le taux de porosité est inférieur à 0,5 %, et, aux extrémités des ailes, des zones (241, 242) décompactées témoignant du glissement interlaminaire. Ces zones sont éliminées par détourage au jet d'eau abrasif ou à l'outil coupant.

Figure 2D, la pièce (250) est finie à l'issue de ce détourage. Les renforts (120) à 0° suivent la courbure de la pièce alors que les renforts (110) orientés selon un angle α par rapport à cette direction, se prolongent d'un bord à l'autre de la pièce et s'étendent dans les deux plans sécants des ailes, comme le montre la figure 2C selon une vue en coupe. Déjà correctement orientés dans le flan avant l'estampage, les renforts fibreux sont peu contraints lors du formage et conservent leur orientation nominale dans une tolérance serrée.

La description ci-avant et les exemples de réalisation montrent que l'invention atteint les objectifs visés, en particulier, par la combinaison du procédé de drapage automatisé et de l'estampage elle permet d'obtenir d'une pièce (250) courbe comportant au moins deux ailes s'étendant dans des plans sécants et constituée d'un matériau composite à matrice thermoplastique à haute performance telle que le PEEK et dont les renforts respectent l'orientation nominale en tout point de la pièce. Ainsi, le procédé objet de l'invention permet de réaliser, notamment, les cadres de renfort d'un fuselage d'aéronef.

## Revendications

1. Procédé pour la réalisation d'une pièce en forme d'extrusion constituée d'un matériau composite à renfort fibreux continu, dans une matrice thermoplastique comprenant au moins deux ailes, dont les centres des sections successives suivent une courbe et au moins deux faces s'étendant dans des plans sécants, lequel procédé comprenant les étapes consistant à :
a. obtenir un flan (230) plan, comportant un empilement préconsolidé de plis, comprenant des fibres orientée à 0° par rapport à la courbure du flan, réalisé par placement automatique de fibres (210, 220) dites pré-imprégnées d'un polymère thermoplastique, selon des trajectoires courbes comportant une opération consistant à :
d. déposer par placement automatique de fibres, des fibres (210, 220) orientées localement suivant la courbure du flan sur toute la longueur du flan en appliquant lesdites fibres avec une pression et une température à l'interface entre lesdites fibres et la préforme constituée d'un empilement de plis fibreux également pré-imprégnés, supérieure de 5°C à 10 ° C à la température de fusion du polymère, lesdites fibres faisant alors partie de la préforme, suivi d'un refroidissement des fibres déposées par des moyens (360) de refroidissement, avec une vitesse (V) de dépose sélectionnée afin d'obtenir une préconsolidation du flan, c'est-à-dire avec un taux de porosité inférieur à 1% mais sans créer un réseau continu de chaîne moléculaires dans l'épaisseur de la matrice ;
b. réchauffer ledit flan (230) à une température supérieure ou égale à la température de fusion du polymère constituant la matrice ;
c. estamper à chaud le flan ainsi réchauffé et consolider la pièce (250) ainsi formée entre le poinçon et la matrice d'estampage.

2. Procédé selon la revendication 1, dans lequel le polymère thermoplastique est un polyéteréthercétone

3. Procédé selon la revendication 2, dans lequel la température de dépose de l'étape d) est de l'ordre de 350 °C.

4. Procédé selon la revendication 1, dans lequel l'étape d) comprend la dépose de fibres (110) orientées selon un angle α par rapport à la courbure du flan (230).

## Patentansprüche

1. Verfahren zur Herstellung eines Teils in Extrusionsform, das aus einem Verbundwerkstoff mit durchgehender Faserverstärkung besteht, in einer Thermoplastmatrix, die mindestens zwei Rippen umfasst, deren Mitten der sukzessiven Abschnitte einer Kurve folgen, und mindestens zwei Flächen, die sich in schneidenden Ebenen erstrecken, wobei das Verfahren die folgenden Schritte umfasst:
a. Erhalten eines flachen Zuschnitts (230), der eine vorab konsolidierte Stapelung aus Falten umfasst, die an 0° bezüglich der Biegung des Zuschnitts ausgerichtete Fasern umfasst, die durch automatisches Platzieren von Fasern (210, 220), die mit einem Thermoplastpolymer vorimprägniert genannt werden, entlang gebogener Bahnen hergestellt wird, das einen Vorgang umfasst, der aus Folgendem besteht:
d. durch automatisches Platzieren von Fasern Ablagern von Fasern (210, 220), die lokal entlang der Biegung des Zuschnitts auf der gesamten Länge des Zuschnitts ausgerichtet sind, indem die Fasern an der Schnittfläche zwischen den Fasern und der Vorform, die aus einer Stapelung von Fasernfalten besteht, die auch vorimprägniert sind, mit einem Druck und einer Temperatur, die um 5 °C bis 10 °C höher ist als die Schmelztemperatur des Polymers, angelegt wird, wobei die Fasern daher Teil der Vorform sind, gefolgt von einem Abkühlen der abgeschiedenen Fasern durch Kühlmittel (360) mit einer Ablagerungsgeschwindigkeit (V), die ausgewählt ist, um eine Vorverfestigung des Zuschnitts zu erhalten, das heißt mit einer Porositätsrate kleiner als 1 %, aber ohne ein kontinuierliches Netzwerk molekularer Ketten in der Stärke der Matrix zu bilden;
b. Wiedererhitzen des Zuschnitts (230) auf eine Temperatur größer oder gleich der Schmelztemperatur des Polymers, das die Matrix bildet;
c. Warmstanzen des derart wiedererhitzten Zuschnitts und Konsolidieren des derart zwischen dem Stempel und der Stanzmatrix gebildeten Teils (250).

2. Verfahren nach Anspruch 1, wobei das Thermoplastpolymer ein Polyetheretherketon ist.

3. Verfahren nach Anspruch 2, wobei die Ablagerungstemperatur des Schritts d) in der Größenordnung von 350 °C liegt.

4. Verfahren nach Anspruch 1, wobei der Schritt d) das Ablagern von Fasern (110) umfasst, die gemäß einem Winkel α bezüglich der Biegung des Zuschnitts (230) ausgerichtet sind.

## Claims

1. Method for the product of a part in extrusion form constituted of a composite material with continuous-fiber reinforcement, in a thermoplastic matrix comprising at least two wings, of which the centers of the successive sections follow a curve and at least two faces extending in secant planes, said method comprising the steps consisting in:
a. obtaining a planar blank (230), comprising a preconsolidated stack of plies, comprising fibers oriented at 0° with respect to the curvature of the blank, produced by automatically positioning so-called preimpregnated thermoplastic polymer fibers (210, 220), according to curved trajectories comprising an operation consisting in:
d. depositing via automatic fiber positioning, of the fibers (210, 220) oriented locally along the curvature of the blank by applying said fibers with a pressure and a temperature at the interface between said fibers and the preform constituted of a stack of fibrous plies also preimpregnated, greater by 5 °C to 10 °C than the melting temperature of the polymer, said fibers then being part of the preform, followed by a cooling of the fibers deposited by the means (360) of cooling, with a deposition speed (V) that is selected in order to obtain a preconsolidation of the blank, i.e. with a rate of porosity less than 1% but without creating a continuous network of molecular chains in the thickness of the matrix;
b. heating said blank (230) to a temperature greater than or equal to the melting temperature of the polymer forming the matrix;
c. hot-stamping the blank heated in this way and consolidating the part (250) formed in this way between the punch and the stamping die.

2. Method according to claim 1, wherein the thermoplastic polymer is a polyether ether ketone.

3. Method according to claim 2, wherein the depositing temperature of the step d) is about 350 °C.

4. Method according to claim 1, wherein the step d) comprises the depositing of fibers (110) oriented according to an angle α with respect to the curvature of the blank (230).
